# EUROPÄISCHE PATENTSCHRIFT

(11) **EP 1 759 613 B1**
(45) Veröffentlichungstag und Bekanntmachung des Hinweises auf die Patenterteilung: **01.10.2014**
(21) Anmeldenummer: 06018086.6
(22) Anmeldetag: 30.08.2006
(51) Int. Cl.: A47C 31/10, B60N 2/60

(54) **Schutzbezug für Autositze zum kurzzeitigen Gebrauch**
A protective seat cover for short-term use
Housse de protection de siège pour l'utilisation de courte durée

(30) Priorität: 01.09.2005 DE 202005013877 U
(43) Veröffentlichungstag der Anmeldung: 07.03.2007
(73) Patentinhaber: MEWA Textil-Service AG & Co Management oHG, 65189 Wiesbaden (DE)
(72) Erfinder: Mertens, Silvia, 65193 Wiesbaden (DE)
(74) Vertreter: Tergau & Walkenhorst

(56) Entgegenhaltungen:
- FR-A1- 2 800 332
- US-A- 5 618 082

## Beschreibung

Die Erfindung bezieht sich auf einen Schutzbezug für einen Autositz mit einem ersten Abdeckteil für die Sitzfläche, einem zweiten Abdeckteil für die Lehnenvorderseite sowie einer Mehrzahl von Seitenabdeckteilen für die Lehnenseiten.

Bei der Wartung, Reparatur oder Inspektion eines Kraftfahrzeugs in einer Autowerkstatt kann eine Probefahrt im öffentlichen Verkehr durch einen Kraftfahrzeugmechaniker erforderlich sein. Bei einer derartigen Benutzung eines Kundenfahrzeugs durch den Kraftfahrzeugmechaniker besteht die Gefahr, dass der Autositz durch schmutzige, insbesondere durch ölige, Berufsbekleidung verschmutzen kann. Um dies sicher zu verhindern, kann der Autositz eines einer Wertstatt anvertrauten Kraftfahrzeugs mit einem öl- und schmutzabweisenden oder - auf-saugenden Schutzbezug versehen werden.

Zu diesem Zweck können Einmalschutzbezüge aus dünner Kunststofffolie Verwendung finden. Derartige Einmalschutzbezüge lassen sich jedoch nur unbefriedigend handhaben und neigen darüber hinaus vergleichsweise schnell zum Zerreißen. Weiterhin verursachen derartige Einmalschutzbezüge in unerwünschter Weise zusätzlichen Abfall.

Bei Kraftfahrzeugen moderneren Entwicklungstyps kommen in den Autositzen jedoch in verstärktem Maße sogenannte Seitenairbags zum Einsatz. Dabei ist in der Rückenlehne des Autositzes eine Vorrichtung angeordnet, die unter geeigneten Bedingungen - die beispielsweise einen Aufprall in eindeutiger Weise charakterisieren - ein Luftkissen zur Entfaltung bringt. Dieses Luftkissen füllt den Raum beispielsweise zwischen Fahrersitz und Autotür in geeigneter Weise derart aus, dass das Verletzungsrisiko für den Fahrer und/oder Beifahrer deutlich gemindert ist.

Voraussetzung für die ordnungsgemäße Funktionsfähigkeit eines derartigen Seitenairbags ist jedoch, dass sich das Luftkissen ungehindert in der vorbestimmten Weise entfalten und den ihm zugewiesenen Raum somit zuverlässig ausfüllen kann. Sitzschutzbezüge, die ein ungestörtes Austreten auch von Seitenairbags ermöglichen sollen, sind aus den Druckschriften DE 200 08 237 U1, DE 297 02 869 U1, DE 297 04 593 U1, DE 197 27 746 A1 und DE 196 48 529 C1 bekannt. Diese Schutzbezüge sind jedoch für eine dauerhafte Installation am Autositz vorgesehen und für einen vorübergehenden Gebrauch nicht geeignet.

Für den kurzzeitigen Gebrauch, wie beispielsweise im Werkstattbereich oder bei Kfz-Überführungen, kann ein mehrfachverwendbarer Schutzbezug für den Autositz zur Verwendung kommen, wie er beispielsweise aus der EP 1 193 118 A2 bekannt ist. Ein derartiger Schutzbezug ist aus einem belastbaren, für die Beanspruchung mit verölter oder beschmutzter Berufsbekleidung besonders angepassten Gewebe gefertigt. Der bekannte Schutzbezug ist zudem in besonderer Weise an die übliche Form eines Autositzes angepasst und kann insbesondere auch bei unterschiedlichen, individuellen Sitzgrößen in besonders einfacher Wiese angelegt und wieder entfernt werden. Dabei weist der Schutzbezug ein erstes Abdeckteil auf, das in montiertem Zustand zur Abdeckung der Sitzfläche des Autositzes dient. Zudem umfasst der Schutzbezug ein zweites und ein drittes Abdeckteil, die in montiertem Zustand zur Abdeckung der Lehne des Autositzes vorgesehen sind. Das zweite Abdeckteil dient dabei zur Abdeckung der Lehnenvorderseite, und das dritte Abdeckteil dient zur Abdeckung der Lehnenrückseite.

Für eine gute Passform am Autositz können das zweite und das dritte Abdeckteil eines derartigen Schutzbezuges an ihren Seitenbereichen zur Bildung einer Bezugshülle miteinander verbunden sein. Beim aus der EP 1 193 118 A2 bekannten Schutzbezug ist diese Verbindung über Seitenstreifen hergestellt. Die Verbindung ist dabei derart ausgebildet, dass eine lückenlose, die Lehne des Autositzes zumindest im oberen Bereich vollständig umhüllende Bezugshülle entsteht, so dass an keiner Stelle eine Verschmutzung bis zum eigentlichen Sitz durchdringen kann.

Durch eine Sollbruchnaht an den Seitenstreifen ist auch die ordnungsgemäße Funktion des Airbags gewährleistet.

Durch die Hüllenform dieses Schutzbezuges und entsprechenden Spannmitteln an der Lehnenrückseite ist jedoch die Handhabung des Bezuges, d. h. die Montage und Demontage für den kurzzeitigen Einsatz, vergleichsweise umständlich und zeitaufwendig.

Ein gattungsgemäßer Schutzbezug für einen Kraftfahrzeugsitz ist aus dem Dokument FR 2800332 bekannt.

Der Erfindung liegt daher die Aufgabe zugrunde, einen Schutzbezug der oben genannten Art anzugeben, der einerseits für eine zuverlässige Reinhaltung auch verschiedenartiger Autositze universell einsetzbar und auch bei Kraftfahrzeugen mit im Autositz angeordnetem Seitenairbag ohne Sicherheitseinbußen verwendbar ist, und der andererseits für eine einfache und schnelle Handhabung bei der Montage und Demontage besonders geeignet ist.

Diese Aufgabe wird erfindungsgemäß durch ein Schutzbezug mit den Merkmalen des Anspruchs 1 gelöst.

Vorteilhafte Ausgestaltungen der Erfindung sind Gegenstand der Unteransprüche.

Die Erfindung geht von der Überlegung aus, dass für eine zuverlässige Reinhaltung des Autositzes eine durchgehende Bedeckung der möglicherweise mit verschmutzter Berufskleidung in Kontakt kommenden Oberflächenbereiche des Autositzes durch den Schutzbezug beibehalten werden sollte. Des weiteren soll die Funktion eines Sitz/Seitenairbags, der seitlich in der Lehne des Autositzes angebracht ist, bei aufgezogenem Schutzbezug vollständig gewährleistet sein. Um eine zuverlässige Entfaltung des Seitenairbags im Bedarfsfall sicherzustellen und unter Einhaltung dieser Randbedingungen zudem noch eine schnelle und einfache Montage und Demontage des Schutzbezuges bei guter Passform auf gängige Autositze zu ermöglichen, ist vorgesehen, den Schutzbezug an der Sitzlehne lediglich im Bereich von deren Kopfstütze zu fixieren.

Dies wird erreicht, in dem das Fixierstück und das zweite Abdeckteil im Kopfbereich als Ummantelung der Sitzkopfstütze ausgeführt sind und der verbleibende Teil des zweiten Abdeckteils mit den Seitenabdeckteilen für den Lehnenbereich als Schutzhalbhülle ausgeführt ist. Eine schnelle Montage und Demontage des Schutzbezuges sowie eine Anpassbarkeit an verschiedene Sitzkopfstützentypen wird dabei gewährleistet, indem das Fixierstück aus einem ausreichend elastisch gehaltenen Material besteht.

Das Material, insbesondere das Gewebe des Fixierstücks ist dabei im Vergleich zum Material des zweiten Abdeckteils elastischer gewählt, so dass die Anbringung des Schutzbezuges am Autositz im wesentlichen durch Verformung des Fixierstücks und weitgehend ohne Verformung des zweiten Abdeckteils erfolgen kann. Dies erleichtert insbesondere die angestrebte Passgenauigkeit.

Zweckmäßig sind alle Abdeckteile des Schutzbezuges miteinander durch Nähte verbunden und/oder das Lehnenabdeckteil und das Sitzflächenabdeckteil aus einem Stück gefertigt.

Vorteilhafterweise wird das Fixierstück in Verbindung mit dem zweiten Abdeckteil in Längsrichtung am oberen Rand offen ausgeführt, so das eine Art Schlauch oder Mantel entsteht. Somit ist eine Anpassung an verschiedene Kopfstützenarten und Kopfstützengrößen gegeben. Weiterhin kann die Kopfstütze, bei höhenverstellbaren Kopfstützen, auf die entsprechende Höhe, die vom Fahrer abhängig ist, bei aufgezogenem Schutzbezug eingestellt werden.

Erfindungsgemäß ist das Fixierstück aus einem elastischen Material gefertigt. Damit ist eine besonders hohe Elastizität dieses Bezugteils erreichbar, so dass die Handhabung besonders erleichtert ist. Weiterhin erlaubt das elastische Material eine besonders weitgehende Anpassung an verschiedene Kopfstützenformen.

In besonders zweckmäßiger Ausgestaltung sind die Abdeckteile aus einem ölsaugfähigen Gewebe, beispielsweise aus einem Mikrofasergewebe oder aus einem baumwollhaltigen Mischgewebe, gefertigt. Dadurch ist ein Durchdringen von Verschmutzungen insbesondere von Flüssigkeiten auf den Autositz zuverlässig verhindert. Weiterhin kann gegebenenfalls auch eine Schutzbeschichtung vorgesehen sein. Das ölsaugfähige Gewebe weist zweckmäßigerweise ein Gewebegewicht von 100 g/m² bis 1000 g/m², vorzugsweise von etwa 300 g/m², auf.

Für eine besonders vielfältige Einsatzmöglichkeit ist der Schutzbezug vorteilhafterweise als universell anwendbarer oder für eine besonders große Vielzahl von Autositztypen verwendbarer Schutzbezug ausgebildet. Dazu sind die Abdeckteile so geschnitten, dass diese in ihrer Passform an gängige Autositzformen angepasst sind.

Um eine gute Anpassung des Sitzflächenabdeckteils an die Autositzfläche zu erreichen und um eine weitere Fixierungs-/Spann- Möglichkeit zu erhalten, ist zweckmäßigerweise die Frontschürze des Sitzflächenabdeckteils mit Gummizügen an den seitlichen Rundungen versehen. Somit liegt die Frontschürze besonders eng und stabil am Autositz an und ist durch die Gummizüge weiterhin variabel für verschiedene Autositzbreiten ausgelegt.

Um die freie und vorschriftsmäßige Entfaltung der Seitenairbags im Autositz zu gewährleisten, sind die Seitenabdeckteile vorteilhafterweise umklappbar am Lehnenabdeckteil angebracht. Bei Auslösen des Airbag werden diese Seitenabdeckteile einfach vom Airbag umgeklappt. Ein Schutz vor Verschmutzung des Autositzes ist durch diese Art von Seitenabdeckteilen ebenfalls gegeben.

Vorteilhafterweise sind die freien Ränder der Abdeckteile mit einem Einfaßband eingefasst oder paspeliert. Diese Art von Einfassung verhindert ein Ausfransen des Schutzbezuges an den Rändern und gibt dem Schutzbezug zusätzlich Form.

Zweckmäßig ist auf dem Lehnenabdeckteil ein Etikett sichtbar angebracht oder eingefertigt, das insbesondere mit einem Firmenlogo versehen sein kann. Somit ist der Schutzbezug gut als Schutzbezug zu erkennen und wird nach Benutzung nicht im Kraftfahrzeug vergessen.

Als Vorteil für das logistische Management der Schutzbezüge, die insbesondere im Mietservice eingesetzt werden können und industriell gewaschen werden, ist auf einem und/oder beiden Seitenabdeckteilen zweckmäßigerweise ein Barcode angebracht. Des weiteren ist er vorzugsweise mit einer Anzahl von Aufhängerschlaufen zwecks Trocknung in einem sogenannten Finisher versehen.

Die mit der Erfindung erzielten Vorteile bestehen insbesondere darin, dass durch das im Kopfbereich angebrachte Fixierstück aus elastischem Material in Verbindung mit dem zweiten Abdeckteil eine leichte und schnelle Handhabung bei der Montage und Demontage am Autositz gegeben ist. Eine gute Fixierung und Variabilität bei gängigen Autositzformen und eine durchgängige, flächige Abdeckung ist ebenfalls dadurch gewährleistet. Somit ist die Gefahr einer Verschmutzung des Autositzes besonders gering gehalten. Zudem ist die Funktionsweise des Seitenairbag im Autositz in keiner Weise eingeschränkt.

Ein Ausführungsbeispiel der Erfindung wird anhand einer Zeichnung näher erläutert. Darin zeigen:
- Fig. 1: einen auf einen Autositz aufgezogenen Schutzbezug in einer Frontansicht, und
- Fig. 2: den Schutzbezug in aufgehängter Position in einer Rückansicht.

Gleiche Teile sind in beiden Figuren mit den selben Bezugszeichen versehen.

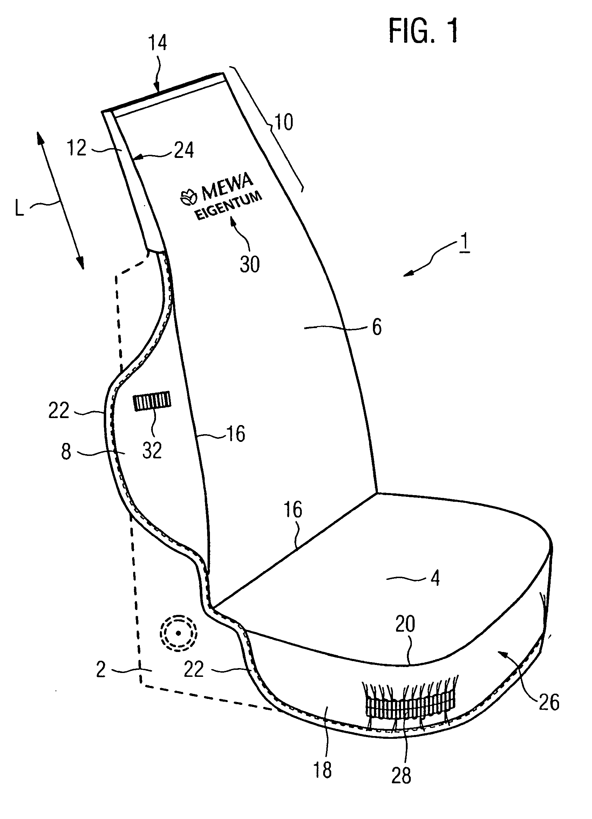

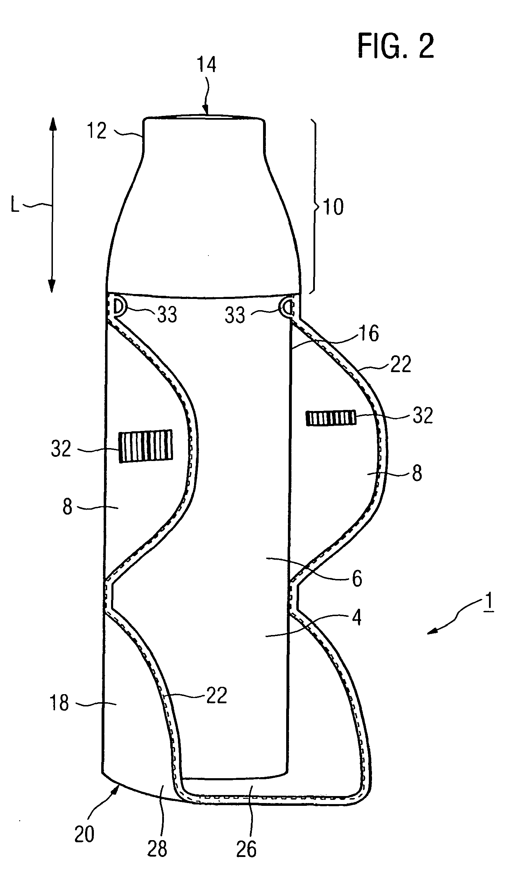

Der Schutzbezug 1 gemäß den Figuren 1 und 2 ist zur sicheren Abdeckung eines Autositzes 2, insbesondere zum Schutz vor Verschmutzungen, bei einer Benutzung eines Kraftfahrzeugs mit verschmutzter Berufskleidung, beispielsweise während eines Werkstattaufenthaltes, vorgesehen. Dazu umfasst der in Fig. 1 gezeigte Schutzbezug 1 ein erstes Abdeckteil 4 zur Abdeckung der Sitzfläche (sogenanntes Sitzflächenabdeckteil), ein zweites Abdeckteil 6 für die Abdeckung der Lehnenvorderseite (sogenanntes Lehnenabdeckteil) und zwei Seitenabdeckteile 8 für die Abdeckung der Sitzlehnenseiten. Im Kopfbereich 10 des zweiten Abdeckteils 6 ist rückseitig ein Fixierstück 12 aus elastischem Material angebracht. Das Fixierstück 12 in Verbindung mit dem zweiten Abdeckteil 6 ist am oberen Rand 14 im Kopfbereich 10 offen ausgeführt.

Die Abdeckteile 4, 6, 8 sind im Ausführungsbeispiel von einem durchgehenden Werkstoffteil, insbesondere einem Gewebeteil, gebildet. Sie können jedoch auch aus Einzelteilen zusammengesetzt sein, wobei eine in Fig. 1 und Fig. 2 dargestellte Verbindungsnaht 16 zum Verbinden des ersten, für die Sitzfläche vorgesehenen ersten Abdeckteils 4 mit dem zweiten, für die Lehnenvorderseite vorgesehenen zweiten Abdeckteil 6 dienen kann. Auch die Seitenabdeckteile 8 können über Verbindungsnähte 16 am Lehnenabdeckteil 6 angebracht sein. Derartige Verbindungsnähte können an geeigneten Stellen, beispielsweise an Kanten oder in Falten des Sitzes, angeordnet sein.

Das erste Abdeckteil 4 weist an seinem Rand eine etwa rechtwinklig abstehende Schürze 18 auf, die zum Schutz der Flanken des Autositzes 2 dient. Weiterhin weist das erste Abdeckteil 4 abgerundete Ecken 20 auf, an die die Schürze 18 in gerundeter Nahtführung anschließt. Die freien Ränder der Abdeckteile 4, 6, 8 und der Schürze 18 sind zur Verstärkung und zum Schutz mit einer saumartigen Umrandung, im Ausführungsbeispiel mit einem einfaßband 22 eingefaßt.

Die Figur 1 zeigt den Schutzbezug 1 in einer Darstellung, wie er aufgezogen auf dem Autositz 2 ausgestaltet ist. Dabei ist erkennbar, dass nur ein geringer Teil des Autositzes 2 vom Schutzbezug 1 nicht bedeckt ist. Gegebenenfalls kann zum Schutz auch dieses Bereichs die Schürze 18 gemeinsam mit den Seitenabdeckteilen 8 überlappend ausgeführt sein. Der Schutzbezug 1 ist weitestgehend der Formgebung des Autositzes 2 angepasst. Insbesondere hinsichtlich der Dimensionierung der Abdeckteile 4, 6 und der Seitenabdeckteile 8 ist der Schutzbezug 1 dabei derart ausgebildet, dass er für möglichst viele Sitzgrößen universell verwendbar ist.

Das zweite Abdeckteil 6 ist im Kopfbereich 10 schmaler ausgeführt, so dass eine verbesserte Passform gegeben ist. Das Fixierstück 12 aus elastischem Material und das zweite Abdeckteil 6 sind im Kopfbereich 10 über eine Verbindungsnaht 24 miteinander an den Seiten in Längsrichtung L verbunden. Im Kopfbereich 10 ist in Längsrichtung L der Verbund aus Fixierstück 12 und zweitem Abdeckteil 6 nach unten und oben offen ausgeführt, so dass die Sitzkopfstütze bei angebrachtem Schutzbezug ummantelt wird. Die Schürze 18 ist derart lang ausgeführt, dass weitgehend die komplette Flanke der Sitzfläche, gegebenenfalls inklusive des Sitzsockels, vor Verunreinigung geschützt ist. Gegebenenfalls kann dabei auch das vordere Teil 26 der Schürze 18 in Verlängerung des ersten Abdeckteils 4 von diesem gebildet sein. Dies kann fertigungstechnisch oder bei der Verwendung für bestimmte Autositztypen von Vorteil sein.

An der Schürze 18 sind im Bereich der abgerundeten Ecken Gummizüge 28 angebracht, um die Schürze 18 an den Sitz 2 anzupassen und auf verschiedene Sitztypen flexibel zu sein.

Im Sichtbereich des ersten Abdeckteils 4 und/oder des zweiten Abdeckteils 6 und/oder im Kopfbereich 10 kann bedarfsweise ein Etikett 30 zur Kennzeichnung angebracht sein, das insbesondere mit einem Firmenlogo des Besitzers versehen sein kann. Auf diese Weise ist einerseits das Lehnenteil des Schutzbezugs 1 schneller erkennbar. Andererseits fällt bei gleichfarbigen Autositzen auf, dass der Schutzbezug 1 noch aufgezogen ist. Ein Vergessen des Schutzbezugs 1 im Kundenfahrzeug ist somit verhindert. Ein gleichwertiger Schutz gegen ein Vergessen des Schutzbezugs 1 im Kundenfahrzeug ist auch erreichbar, indem die Seitenabdeckteile 8 gegenüber den Abdeckteilen 4, 6 farbig abgesetzt oder andersfarbig ausgeführt sind.

Weiterhin kann im Sichtbereich der Seitenabdeckteile 8 bedarfsweise, auf einer oder beiden Seitenabdeckteilen 8, ein Barcode 32 angebracht sein. Dies erweist sich als Vorteil für das logistische Management der Schutzbezüge, die im Mietservice angeboten werden und industriell gewaschen werden. Weiterhin ist der Schutzbezug 1 mit Aufhängeschlaufen 33 versehen, die eine automatisierte Trocknung in einem Finisher ermöglichen.

Der Schutzbezug 1 ist zur universellen Verwendbarkeit auch bei einem Autositz 2 mit Seitenairbag ausgebildet, ohne dass dabei die Funktionsfähigkeit der Seitenairbags beeinträchtigt ist. Dazu sind die Seitenabdeckteile 8 am zweite Abdeckteil 6 umklappbar ausgeführt, so das sie bei Auslösen eines in der Lehne des Autositzes 2 angeordneten Seitenairbags in Richtung Fahrer nach vorne klappen.

Der Schutzbezug 1 ist aus einem öl- oder flüssigkeitssaugfähigen Gewebe gefertigt, wobei beispielsweise ein baumwollhaltiges Mischgewebe oder auch ein Mikrofasergewebe mit Ölsaugeffekt vorgesehen sein kann. Das Gewebe ist dabei hinsichtlich Belastbarkeit derart gewählt, dass der Schutzbezug 1 insgesamt für sogenannte industrielle Waschbarkeit, also für zumindest etwa 30 Industriemaschinenwäschen, geeignet ist. Eine Industriemaschinenwäsche bezeichnet dabei einen Waschvorgang mit einer Dauer von etwa 20 min. bei einer Temperatur von etwa 75°C bei einem Flottenverhältnis von 1:4. Ein Flottenverhältnis von 1:4 ist dabei gegeben bei einem Waschwasseranteil von 41 pro kg zu waschender Textilmenge, wobei das Waschwasser eine Detergenzienkonzentration von etwa 4g eines Standard-Industriewaschmittels pro l Wasser aufweist. Das Gewebe weist weiterhin ein Gewebegewicht von etwa 300 g/m² auf und liegt somit im Bereich von 100 g/m² bis 1000 g/m². Das Gewebe kann weiterhin auch zumindest einseitig mit einer flüssigkeitsdichten Beschichtung versehen sein, so dass ein Durchtreten von Flüssigkeit, insbesondere Öl, auf den Autositz 2 sicher verhindert.

### Bezugszeichenliste

- 1: Schutzbezug
- 2: Autositz
- 4: erstes Abdeckteil (Sitzflächenabdeckteil)
- 6: zweites Abdeckteil (Lehnenabdeckteil)
- 8: Seitenabdeckteile
- 10: Kopfbereich
- 12: Fixierstück
- 14: oberer Rand
- 16: Verbindungsnaht
- 18: Schürze
- 20: Ecken
- 22: Einfaßband
- 24: Verbindungsnaht Fixierstück
- 26: vorderes Teil
- 28: Gummizüge
- 30: Etikett
- 32: Barcode

- L: Längsrichtung

## Patentansprüche

1. Schutzbezug (1) für einen Autositz (2) mit einem ersten Abdeckteil (4) für die Sitzfläche, einem zweiten Abdeckteil (6) für die Lehnenvorderseite sowie einer Mehrzahl von Seitenabdeckteilen (8) für die Lehnenseiten, wobei das zweite Abdeckteil (6) im Kopfbereich (10) rückseitig mit einem Fixierstück (12) aus einem vergleichsweise elastischen Material versehen ist,
**dadurch gekennzeichnet, dass**
das Fixierstück (12) und das zweite Abdeckteil (6) im Kopfbereich (10) über eine Verbindungsnaht (24) miteinander an den Seiten in Längsrichtung (L) verbunden und die Seitenabdeckteile (8) und das Fixierstück (12) in Längsrichtung (L) beabstandet voneinander an dem zweiten Abdeckteil (6) angeordnet sind.

2. Schutzbezug (1) nach Anspruch 1, bei dem das Fixierstück (12) an seinem oberen Rand (14) unter Bildung einer Austrittsöffnung für eine Sitzkopfstütze mit dem zweiten Abdeckteil (6) verbunden ist.

3. Schutzbezug (1) nach einem der Ansprüche 1 oder 2, das erste Abdeckteil (4), das zweite Abdeckteil (6) und die Seitenabdeckteilen (8) aus einem ölsaugfähigen Gewebe gefertigt sind.

4. Schutzbezug (1) nach Anspruch 3, bei dem das ölsaugfähige Gewebe ein Gewebegewicht von 100 bis 1000 g/m², vorzugsweise von etwa 300 g/m², aufweist.

5. Schutzbezug (1) nach einem der Ansprüche 1 bis4, an dessen ersten Abdeckteil (4) eine Frontschürze (18) angebracht ist, die an ihren Seitenteilen mit einer Anzahl von Gummizügen (28) versehen ist.

6. Schutzbezug (1) nach einem der Ansprüche 1 bis 5, dessen Seitenabdeckteile (8) umklappbar angebracht sind.

7. Schutzbezug (1) nach einem der Ansprüche 1 bis 6, bei dem die freien Ränder des ersten Abdeckteils (4), des zweiten Abdeckteils (6) und der Seitenabdeckteile (8) mit einem gepaspelten Band (22) eingefasst sind.

8. Schutzbezug (1) nach einem der Ansprüche 1 bis 7, der auf dem zweiten Abdeckteil (6) ein Etikett (30) aufweist.

9. Schutzbezug (1) nach einem der Ansprüche 1 bis 8, der auf einem und/oder beiden Seitenabdeckteilen (8) ein Barcode (32) aufweist.

## Claims

1. A protective cover (1) for a car seat (2), having a first covering part (4) for the seating surface, a second covering part (6) for the front of the backrest as well as a plurality of side covering parts (8) for the sides of the backrest, the second covering part (6) being provided in the head region (10), on the rear side, with a fixing piece (12) made of a relatively elastic material,
**characterized in that**
the fixing piece (12) and the second covering part (6) are connected to each other, in the head region (10), on the sides in longitudinal direction (L) via a connecting seam (24) and the side covering parts (8) and the fixing piece (12) are arranged in longitudinal direction (L), spaced from each other, on the second covering part (6).

2. The protective cover (1) of claim 1, wherein the upper edge (14) of the fixing piece (12) is connected with the second covering part (6), under formation of an outlet for a seat headrest.

3. The protective cover (1) of any of claims 1 or 2, wherein the first covering part (4), the second covering part (6) and the side covering parts (8) are made of an oil-absorbent tissue.

4. The protective cover (1) of claim 3, wherein the oil-absorbent tissue has a tissue weight of 100 to 1000 g/m², preferably of approx. 300 g/m².

5. The protective cover (1) of any of claims 1 to 4, on whose first covering part (4), a front apron (18) is attached, which is provided on its side parts with a number of elastic bands (28).

6. The protective cover (1) of any of claims 1 to 5, whose side covering parts (8) are attached so that they can be folded down.

7. The protective cover (1) of any of claims 1 to 6, wherein the free edges of the first covering part (4), of the second covering part (6) and of the side covering parts (8) are bordered by a braided band (22).

8. The protective cover (1) of any of claims 1 to 7, which is provided with a label (30) on the second covering part (6).

9. The protective cover (1) of any of claims 1 to 8, which is provided with a bar code (32) on one and/or both side covering parts (8).

## Revendications

1. Housse protectrice (1) pour un siège d'auto (2), ayant un premier élément de recouvrement (4) pour la surface du siège, un deuxième élément de recouvrement (6) pour l'avant du dossier ainsi qu'une pluralité d'éléments de recouvrement latéraux (8) pour les côtés du dossier, le deuxième élément de recouvrement (6) étant doté dans la zone de la tête (10), sur le dos, d'une pièce de fixation (12) fabriquée d'un matériau relativement élastique,
**caractérisée en ce que**
la pièce de fixation (12) et le deuxième élément de recouvrement (6) sont reliés l'un à l'autre, dans la zone de la tête (10), des côtés, en direction longitudinale (L), par une soudure de connexion (24) et les éléments de recouvrement latéraux (8) et la pièce de fixation (12) sont disposés en direction longitudinale (L) de façon espacée l'un de l'autre, au deuxième élément de recouvrement (6).

2. Housse protectrice (1) selon la revendication 1, dans laquelle le bord supérieur (14) de la pièce de fixation (12) est relié au deuxième élément de recouvrement (6), en formant une sortie pour un appuie-tête du siège.

3. Housse protectrice (1) selon l'une quelconque des revendications 1 ou 2, dans laquelle le premier élément de recouvrement (4), le deuxième élément de recouvrement (6) et les éléments de recouvrement latéraux (8) sont fabriqués d'un tissu absorbant de l'huile.

4. Housse protectrice (1) selon la revendication 3, dans laquelle le tissu absorbant de l'huile a un poids de tissu de 100 à 1000 g/m², de préférence d'environ 300 g/m².

5. Housse protectrice (1) selon l'une quelconque des revendications 1 à 4, sur le premier élément de recouvrement (4) de laquelle est fixée un tablier frontal (18) doté, sur ses parts latérales, d'un nombre de rubans élastiques (28).

6. Housse protectrice (1) selon l'une quelconque des revendications 1 à 5, dont les éléments de recouvrement latéraux (8) sont fixé de façon à ce qu'ils puissent être rabattus.

7. Housse protectrice (1) selon l'une quelconque des revendications 1 à 6, dans laquelle les bords libres du premier élément de recouvrement (4), du deuxième élément de recouvrement (6) et des éléments de recouvrement latéraux (8) sont ourlés par un ruban passepoil (22).

8. Housse protectrice (1) selon l'une quelconque des revendications 1 à 7, qui est munie d'une étiquette (30) sur le deuxième élément de recouvrement (6).

9. Housse protectrice (1) selon l'une quelconque des revendications 1 à 8, qui est munie d'un code à barres (32) sur l'un et/ou tous les deux éléments de recouvrement latéraux (8).
